# EUROPEAN PATENT SPECIFICATION

(11) **EP 2 687 423 B1**
(45) Date of publication and mention of the grant of the patent: **18.03.2015**
(21) Application number: 13175667.8
(22) Date of filing: 09.07.2013
(51) Int. Cl.: B62D 3/12, F16H 55/28

(54) **Rack shaft supporting device and vehicle steering system**
Zahnstangenstützvorrichtung und Fahrzeuglenksystem
Dispositif de support d'arbre de crémaillère et système de direction de véhicule

(30) Priority: 17.07.2012 JP 2012158909
(43) Date of publication of application: 22.01.2014
(73) Proprietor: JTEKT CORPORATION, Osaka-shi Osaka 542-8502 (JP)
(72) Inventor: Fujita, Tetsuya, Osaka-shi, Osaka 542-8502 (JP); Yamamoto, Taichi, Osaka-shi, Osaka 542-8502 (JP)
(74) Representative: Winter, Brandl, Fürniss, Hübner, Röss, Kaiser, Polte - Partnerschaft mbB

(56) References cited:
- JP-A- 2005 014 815
- US-A1- 2010 024 583
- US-A1- 2010 122 595
- US-B1- 7 487 984

## Description

### BACKGROUND OF THE INVENTION

### 1. Field of the Invention

The invention relates to a rack shaft supporting device and a vehicle steering system including the rack shaft supporting device. 2. Discussion of Background

A rack shaft supporting device for removing backlash between a rack and a pinion is provided in a rack-and-pinion steering system. In the rack shaft supporting device, a support yoke slidable back and forth and a compression coil spring for urging this support yoke are accommodated in a retaining hole provided in a housing. By means of the support yoke urged by the compression coil spring, a rack shaft is supported so as to be slidable in its axial direction and the rack shaft is pressed toward a pinion shaft.

However, when abrasion of a slide portion between the rack shaft and the support yoke progresses due to a long-term use, backlash of the support yoke in its longitudinal direction increases, which may result in occurrence of rattle noise. In a rack shaft supporting device described in US2010/0024583 A1, when abrasion is caused in the slide portion, a cam is rotated by a twisted spring and the rotation of the cam is converted into a rectilinear motion of a cam follower. The support yoke is pushed toward the rack shaft by the cam follower thus advanced, so as to prevent a gap that might be caused between the rack and the pinion due to the abrasion.

In US2010/0024583 A1, an annular elastic member is provided between the cam follower and the support yoke. A fixing member fixed to the support yoke extends through the cam follower. Thus, when an engagement portion formed in an end portion of the fixing member engages with the cam follower, a gap between the support yoke and the cam follower is set to a predetermined amount.

However, if a screw-in position of a bolt or the like, which constitutes the fixing member, with respect to the support yoke varies, the gap might vary. In this case, a variation in a backlash amount due to a variation in engagement between the pinion and the rack cannot be absorbed.

### SUMMARY OF THE INVENTION

The invention provides a rack shaft supporting device and a vehicle steering system each of which is able to absorb a variation in engagement and to reliably restrain occurrence of noise for a long period.

According to a feature of an example of the invention, a rack shaft supporting device includes: a fixing member fixed to a housing; a support yoke that supports a rack shaft so that the rack shaft is slidable; a support member that is provided between the fixing member and the support yoke, and that supports the support yoke; an intermediate member provided between the fixing member and the support member; a cam mechanism including paired cam surfaces provided either in paired facing surfaces of the fixing member and the intermediate member or in paired facing surfaces of the intermediate member and the support member, the paired cam surfaces being engaging with each other; a rotational force applying spring that rotates members in which the paired cam surfaces are formed, relative to each other; a washer provided between a first surface constituted by either one of paired facing surfaces of the support member and the support yoke, and a second surface constituted by the other of the paired facing surfaces, the washer having an insertion hole formed therein; characterized by a compression spring provided between the second surface and the washer and pressing the support yoke toward the rack shaft; and a set length regulation mechanism that regulates a set length of the compression spring, wherein the set length regulation mechanism includes: a recessed portion provided in the first surface; a projection shaft including a proximal end portion fixed to the second surface and a distal end portion provided with a receiving portion that receives the washer, the projection shaft being inserted through the insertion hole of the washer so as to project into the recessed portion; and a positioning stepped portion provided in either one of the proximal end portion and the distal end portion of the projection shaft, the positioning stepped portion abutting on a corresponding one of the second surface and the receiving portion.

### BRIEF DESCRIPTION OF THE DRAWINGS

The foregoing and further objects, features and advantages of the invention will become apparent from the following description of example embodiments with reference to the accompanying drawings, wherein like numerals are used to represent like elements and wherein:
FIG. 1 is a schematic view illustrating a schematic configuration of a rack-and-pinion vehicle steering system according to one embodiment of the invention;
FIG. 2 is a sectional view of a rack shaft supporting device;
FIG. 3 is an enlarged sectional view of a main portion of the rack shaft supporting device;
FIG. 4 is an enlarged sectional view of a main portion of a rack shaft supporting device according to another embodiment of the invention;
FIG. 5 is an enlarged sectional view of a main portion of a rack shaft supporting device according to further another embodiment of the invention;
FIG. 6 is an enlarged sectional view of a main portion of a rack shaft supporting device according to further another embodiment of the invention;
FIG. 7 is a sectional view of a rack shaft supporting device according to further another embodiment of the invention; and
FIG. 8 is an enlarged sectional view of a main portion of the rack shaft supporting device according to the embodiment in FIG. 7.

### DETAILED DESCRIPTION OF EMBODIMENTS

Hereinafter, embodiments of the invention will be described with reference to the accompanying drawings.

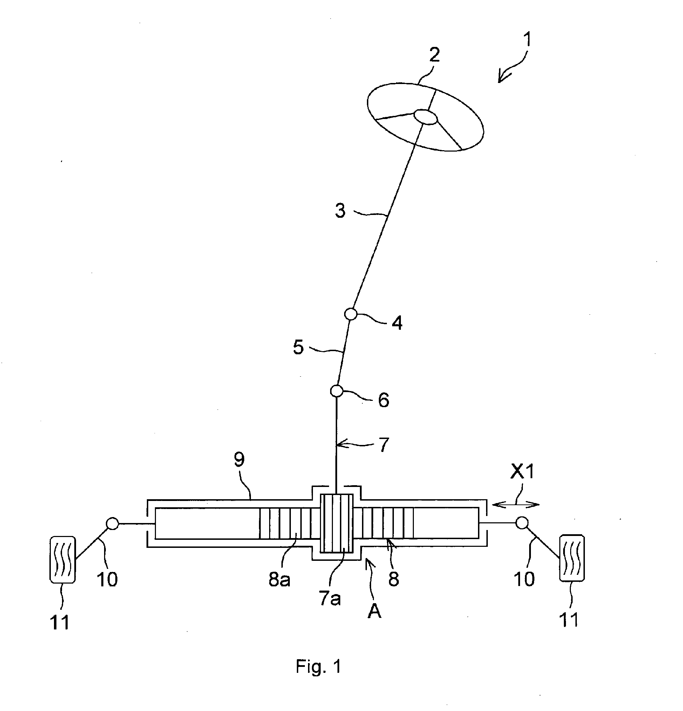

Referring now to FIG. 1, a vehicle steering system 1 includes a steering shaft 3 connected to a steering member 2 such as a steering wheel, an intermediate shaft 5 connected to the steering shaft 3 via a universal joint 4, a pinion shaft 7 connected to the intermediate shaft 5 via a universal joint 6, and a rack shaft 8 including a rack 8a engaging with a pinion 7a provided in vicinity of an end portion of the pinion shaft 7 and serving as a steered shaft extending in a lateral direction of a vehicle. A steered mechanism A including a rack-and-pinion mechanism is constituted by the pinion shaft 7 and the rack shaft 8.

The rack shaft 8 is supported, in a rack housing 9 fixed to a vehicle body, via a plurality of bearings (not shown) so as to be able to linearly reciprocate along an axial direction X1. Both end portions of the rack shaft 8 project toward respective sides of the rack housing 9, and respective tie rods 10 are connected to the end portions. Each of the tie rods 10 is connected to a corresponding steered wheel 11 via a corresponding knuckle arm (not shown).

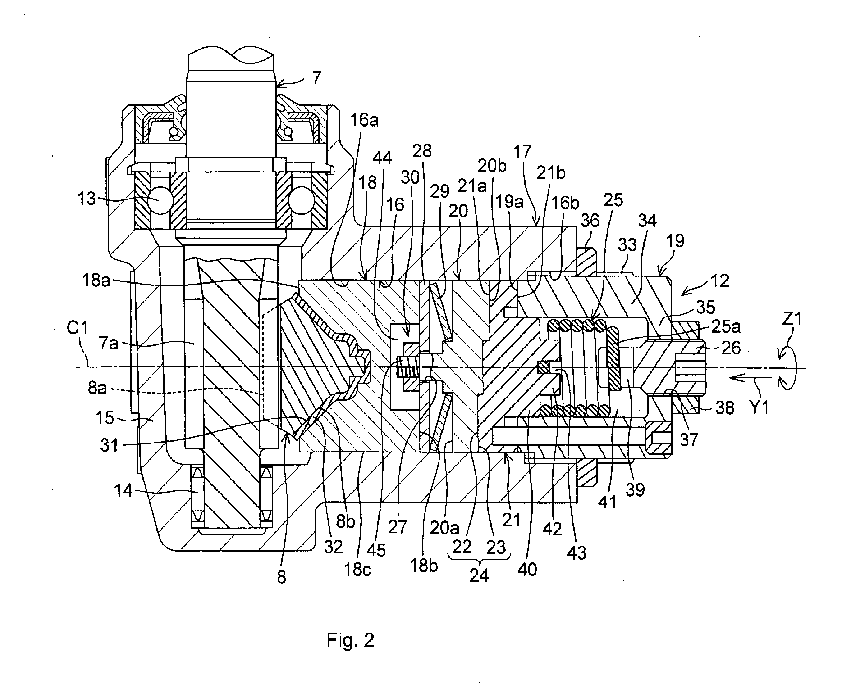

When the steering member 2 is operated to rotate the steering shaft 3, this rotation is converted by the pinion 7a and the rack 8a into a linear motion of the rack shaft 8 along the lateral direction of the vehicle. Thus, the steered wheel 11 is steered. Referring now to FIG. 2, the pinion shaft 7 is rotatably supported by bearings 13 and 14 in a pinion housing 15. The pinion 7a of the pinion shaft 7 and the rack 8a of the rack shaft 8 engage with each other in the pinion housing 15.

The vehicle steering system 1 includes a rack shaft supporting device 12. The rack shaft 8 is supported so as to be slidable in its axial longitudinal direction by the rack shaft supporting device 12 and a bearing (not shown) provided in the rack housing 9 (see FIG. 1) connected to the pinion housing 15. The rack shaft supporting device 12 includes a housing 17 having a retaining hole 16 constituted by a round hole, a support yoke 18 accommodated in the retaining hole 16 so as to be slidable along a depth direction Y1 of the retaining hole 16 and serving as a rack shaft supporting member that supports a back face 8b of the rack 8a of the rack shaft 8 so that the rack shaft 8 is slidable, and a fixing member 19 constituted by a plug screwed in an inlet of the retaining hole 16 and fixed thereto.

Further, the rack shaft supporting device 12 includes a support member 20 provided between the support yoke 18 and the fixing member 19 to support the support yoke 18 and movable in the depth direction Y1, and an intermediate member 21 provided between the fixing member 19 and the support member 20 and rotatable around a central axis C1 of the retaining hole 16. Further, the rack shaft supporting device 12 includes: a cam mechanism 24 including paired cam surfaces 22 and 23 provided respectively in a front face 21a (a facing surface) of the intermediate member 21 and in a rear face 20b (a facing surface) of the support member 20 and engaging with each other; a rotational force applying spring 25 that is constituted by a torsion coil spring connecting the fixing member 19 with the intermediate member 21 to give, to the intermediate member 21, a rotational force around the central axis C1, and that rotates the intermediate member 21 relative to the support member 20; and an adjustment thread 26 attached to the fixing member 19 so as to be able to perform position adjustment and serving as a torsion amount adjusting member for adjusting an initial torsion amount of the rotational force applying spring 25.

The cam mechanism 24 has a function to convert a rotation of the intermediate member 21 (a relative rotation of the intermediate member 21 with respect to the support member 20) due to torsion return of the rotational force applying spring 25, into the movement of the support member 20 in the depth direction Y1 toward the support yoke 18. Although not illustrated here, a plurality of pairs of cam surfaces 22 and 23 is provided at intervals in a circumferential direction Z1, and the cam surfaces 22 and 23 are undulating in the depth direction Y1 along the circumferential direction Z1 (i.e., the positions of the cam surfaces 22 and 23 in the depth direction Y1 vary along the circumferential direction Z1). The paired cam surfaces 22 and 23 are inclined reversely to each other so as to make surface contact with each other.

A rolling element (not shown) such as a ball may be provided between the paired cam surfaces 22 and 23. This makes it possible to smoothly rotate the cam surfaces 22 and 23 (the intermediate member 21 and the support member 20) relatively to each other with a little rotational resistance. Further, the rack shaft supporting device 12 includes: a washer 28 provided between a first surface formed of a rear face 18b (a facing surface) of the support yoke 18 and a second surface formed of a front face 20a (a facing surface) of the support member 20, abutting on the rear face 18b (the first surface) of the support yoke 18, and having an insertion hole 27 formed therein; a coned disc spring 29 provided between the front face 20a (the second surface) of the support member 20 and the washer 28 and serving as a compression spring for urging the support yoke 18 toward the rack shaft 8 via the washer 28; and a set length regulation mechanism 30 for regulating a set length of the coned disc spring 29 (the compression spring).

The coned disc spring 29 makes contact with the washer 28 making surface contact with the rear face 18b (the first surface) of the support yoke 18 that is non-rotatable, and makes contact with the front face 20a of the support member 20. Accordingly, the coned disc spring 29 applies a pressing force to both of the faces (the rear face 18b and the front face 20a). Thus, the coned disc spring 29 regulates a rotation of the support member 20 around the central axis C1. The rotation of the support member 20 may be regulated while the movement of the support member 20 in the depth direction Y1 is guided by engaging a pin (not shown) radially extending through the retaining hole 16 with a longitudinal groove (a groove extending in the depth direction Y1; not shown) provided on an outer periphery of the support member 20.

The housing 17 of the rack shaft supporting device 12 is formed integrally with the pinion housing 15 and placed at a side opposite to the pinion shaft 7 across the rack shaft 8. The support yoke 18 has a front face 18a opposed to the rack shaft 8, the rear face 18b serving as a facing surface opposed to the intermediate member 21, and an outer periphery 18c formed of a cylindrical surface fitted to an inner periphery 16a of retaining hole 16. In the front face 18a of the support yoke 18, a recessed surface 31 having substantially the same shape as the shape of the back face 8b of the rack shaft 8 is formed. A low-frictional slide contact plate 32 making slide contact with the back face 8b of the rack shaft 8 is attached to the recessed surface 31.

The fixing member 19 includes a tubular portion 34 having, on its outer periphery, an external thread portion 33 fitted to an internal thread 16b on the inner periphery 16a of the inlet of the retaining hole 16, and an end wall 35 closing one end of the tubular portion 34. A lock nut 36 screwed to the external thread portion 33 is pressed onto an end face of the housing 17, and thus the fixing member 19 is fitted to the housing 17. The adjustment thread 26 is screwed into a thread hole 37 formed in the end wall 35 and extends through the end wall 35. A lock nut 38 screwed to the adjustment thread 26 is pressed onto an end face of the end wall 35, and thus, the adjustment thread 26 is fitted to the fixing member 19. A holding portion 39 in which one end 25a of the rotational force applying spring 25 is held, and which is constituted by, for example, a groove, is provided in a distal end of the adjustment thread 26 disposed within the tubular fixing member 19.

A front face 19a (corresponding to an annular front end face of the tubular portion 34) of the fixing member 19 contacts a rear face 21b of the intermediate member 21. Each of the front face 19a and the rear face 21b is formed of a flat surface perpendicular to the depth direction Y1. The front face 19a of the fixing member 19 and the rear face 21b of the intermediate member 21 slide relative to each other as the intermediate member 21 rotates. At least one of the front face 19a and the rear face 21b may be coated with a low friction material such as fluororesin or a low friction plate may be provided between the front face 19a and the rear face 21b so that the intermediate member 21 rotates smoothly.

The intermediate member 21 includes a boss 40 fitted to an inner circumference of the tubular portion 34 of the fixing member 19 in a relatively rotatable manner. Within the fixing member 19 having a tubular shape, an accommodation space 41, in which the rotational force applying spring 25 is accommodated, is formed between the boss 40 of the intermediate member 21 and the end wall 35 of the fixing member 19. A projection 42 projecting from an end face of the boss 40 is provided with a holding portion 43 in which the other end 25b of the rotational force applying spring 25 is held, and which is constituted by, for example, a groove.

By adjusting the adjustment thread 26 so as to change a phase (a positional relationship in the circumferential direction Z1) between the one end 25a and the other end 25b of the rotational force applying spring 25, it is possible to adjust a rotational force (torsion torque) given to the intermediate member 21 by the rotational force applying spring 25. The intermediate member 21 is rotated due to torsion return of the rotational force applying spring 25, thereby causing the paired cam surfaces 22 and 23 of the cam mechanism 24 to act so that a force (a rotational force) of the intermediate member 21 to rotate is converted into a force of the support member 20 to push the support yoke 18 toward the rack shaft 8.

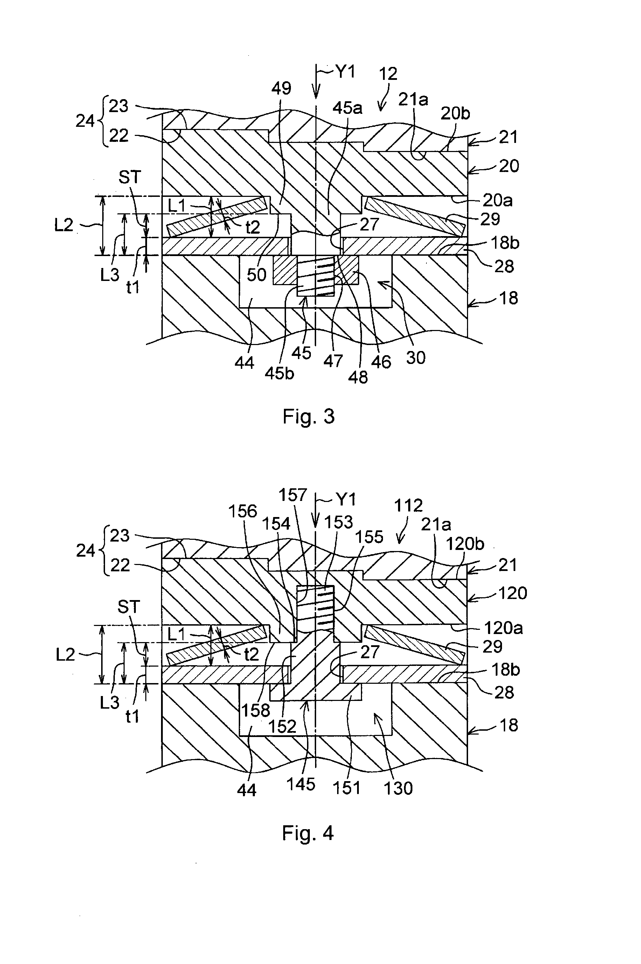

As illustrated in FIG. 3, the set length regulation mechanism 30 that regulates a set length L1 of the coned disc spring 29 (the compression spring) includes a recessed portion 44 provided in the rear face 18b (the first surface) of the support yoke 18, and a projection shaft 45 projecting from the front face 20a (the second surface) of the support member 20 into the recessed portion 44. The projection shaft 45 is formed integrally with the support member 20 from the same material. The projection shaft 45 has a proximal end portion 45a fixed to the front face 20a (the second surface) of the support member 20, and a distal end portion 45b. On an outer periphery of the distal end portion 45b, an external thread portion 47 to which a nut 46 as a receiving member that receives the washer 28 is screwed, and a positioning stepped portion 48 adjacent to the external thread portion 47 and abutting on an end face of the nut 46 to position the nut 46 in an axial direction of the projection shaft 45 are provided.

A large-diameter portion 49 is provided on an outer periphery of the proximal end portion 45a of the projection shaft 45, and an end face of the large-diameter portion 49 constitutes a stepped portion 50. When the coned disc spring 29 (the compression spring) is compressed, the stepped portion 50 abuts on the washer 28 so as to regulate a maximum compression amount of the coned disc spring 29 (corresponding to an effective stroke ST).

According to the present embodiment, when abrasion is caused in a slide portion (more specifically, the slide contact plate 32) of the support yoke 18, the rotational force applying spring 25 rotates members (corresponding to the intermediate member 21 and the support member 20) in which the paired cam surfaces 22 and 23 are formed, relative to each other, and thus, the support yoke 18 is pushed toward the rack shaft 8 via the support member 20. Thus, a distance (corresponding to the set length L1 of the coned disc spring 29 as the compression spring) between the washer 28 and the front face 20a (the second surface) of the support member 20 is maintained to be substantially constant. Accordingly, a pressing force at an engagement portion between the rack 8a and the pinion 7a is maintained to be substantially constant, thereby making it possible to reliably restrain occurrence of noise for a long period.

The recessed portion 44 is provided in the rear face 18b (the first surface) of the support yoke 18, and the projection shaft 45 is fixed to the front face 20a (the second surface) of the support member 20. Further, the nut 46 serving as the receiving member that receives the washer 28 abuts on the positioning stepped portion 48 of the distal end portion 45b of the projection shaft 45. Consequently, it is possible to set a substantial gap between the support member 20 and the support yoke 18 (a gap between the front face 20a of the support member 20 and the washer 28 abutting on the rear face 18b of the support yoke 18, which gap corresponds to the set length L1 of the coned disc spring 29) with high accuracy.

Due to elastic deformation of the compression spring (the coned disc spring 29) accompanied by increase and decrease in the gap thus set with high accuracy, it is possible to absorb a variation in engagement between the rack 8a and the pinion 7a. This prevents occurrence of a situation where backlash between the rack 8a and the pinion 7a is reduced excessively. Further, when a large load due to reverse input from a rack-shaft-8 side is input, the gap disappears due to the elastic compression of the compression spring (the coned disc spring 29), thereby making it possible to firmly receive the large load.

Particularly, even after the support member 20 is displaced by the rotational force applying spring 25 toward the support yoke 18 along with progress of abrasion of the slide portion of the support yoke 18, the gap (corresponding to the set length L1) is maintained at a predetermined value. This prevents occurrence of the situation where backlash between the rack 8a and the pinion 7a becomes extremely small and a steering resistance becomes excessively large. Further, since the nut 46 serving as a receiving portion (the receiving member) that is fitted and fixed to the external thread portion 47 on the outer periphery of the distal end portion 45b of the projection shaft 45 abuts on the positioning stepped portion 48 of the distal end portion 45b of the projection shaft 45, the nut 46 is positioned accurately in the axial direction of the projection shaft 45. Accordingly, it is possible to reliably set the set length L1 of the compression spring (the coned disc spring 29) with high accuracy.

Further, since the proximal end portion 45a of the projection shaft 45 is formed integrally with the front face 20a (the second surface) of the support member 20 from the same material, it is possible to set, with high accuracy, a distance between the nut 46 as the receiving portion and the front face 20a (the second surface) of the support member 20, eventually, a distance between the washer 28 received by the nut 46 and the second surface (the front face 20a). This accordingly makes it possible to set the set length L1 of the compression spring (the coned disc spring 29) with higher accuracy.

Further, when the coned disc spring 29 as the compression spring is compressed, the stepped portion 50 of the projection shaft 45 abuts on the washer 28. This makes it possible to regulate, with high accuracy, the effective stroke ST of the support yoke 18 in the depth direction Y1 (corresponding to the maximum compression amount of the coned disc spring 29). That is, in a case where the stepped portion 50 is not provided, the effective stroke of the support yoke 18 is a value obtained by reducing a plate thickness t1 of the washer 28 and a plate thickness t2 of the coned disc spring 29 from a distance L2 between the rear face 18b (the first surface) of the support yoke 18 and the front face 20a (the second surface) of the support member 20. As a result, the effective stroke is affected by a variation in the plate thickness t1 of the washer 28 and a variation in the plate thickness t2 of the coned disc spring 29.

In contrast, in the present embodiment in which the stepped portion 50 is provided, the effective stroke ST of the support yoke 18 is a value obtained by reducing the plate thickness t1 of the washer 28 from a distance L3 between the rear face 18b (the first surface) of the support yoke 18 and the stepped portion 50. Consequently, the effective stroke ST is not affected by the variation in the plate thickness t2 of the coned disc spring 29, thereby making it possible to set the effective stroke ST with high accuracy.

Further, in the vehicle steering system 1 using the rack shaft supporting device 12, it is possible to restrain an increase in a steering resistance by absorbing a variation in engagement between the rack 8a and the pinion 7a and to prevent occurrence of rattle noise for a long period.

FIG. 4 illustrates a rack shaft supporting device 112 according to another embodiment of the invention. The present embodiment is different from the embodiment in FIG. 3 mainly in that a projection shaft of a set length regulation mechanism 130 in the present embodiment is constituted by a shoulder bolt 145, and is screwed and fixed to a front face 120a (a second surface) of a support member 120.

The shoulder bolt 145 as the projection shaft includes a head 151 having, for example, a hexagon shape and constituting a receiving portion, a large-diameter shank portion 152 adjacent to the head 151 and inserted through the insertion hole 27 of a washer 28, a small-diameter shank portion 153 disposed closer to a leading end of the shoulder bolt 145 (corresponding to a proximal end portion of the projection shaft) than the large-diameter shank portion 152 and having a diameter smaller than that of the large-diameter shank portion 152, a positioning stepped portion 154 formed between the large-diameter shank portion 152 and the small-diameter shank portion 153, and an external thread portion 155 provided on an outer periphery of the small-diameter shank portion 153 so as to be adjacent to the positioning stepped portion 154. The positioning stepped portion 154 is disposed in the proximal end portion of the projection shaft (corresponding to the leading end portion of the shoulder bolt 145).

A boss 156 projecting from the front face 120a of the support member 120 is formed integrally with the support member 120 from the same material. The external thread portion 155 of the shoulder bolt 145 is screwed into a thread hole 157 provided in the boss 156, and the positioning stepped portion 154 abuts on a stepped portion 158 constituted by an end face of the boss 156. A cam surface 23 is provided in a rear face 120b (a facing surface) of the support member 120.

The constituents in the embodiment in FIG. 4 which are the same as the constituents in the embodiment in FIG. 3 have the same reference signs as those of the constituents in the embodiment in FIG. 3. In the present embodiment as well, it is possible to absorb a variation in engagement and to reliably restrain occurrence of noise for a long period, similarly to the embodiment in FIG. 3. Further, it is possible to set, with high accuracy, a distance between the front face 120a and the head 151, serving as the receiving portion, of the shoulder bolt 145 screwed into the thread hole 157 in the front face 120a (the second surface) of the support member 120 so that the positioning stepped portion 154 abuts on the front face 120a, eventually, a distance between the washer 28 received by the head 151 and the second surface (the front face 120a).

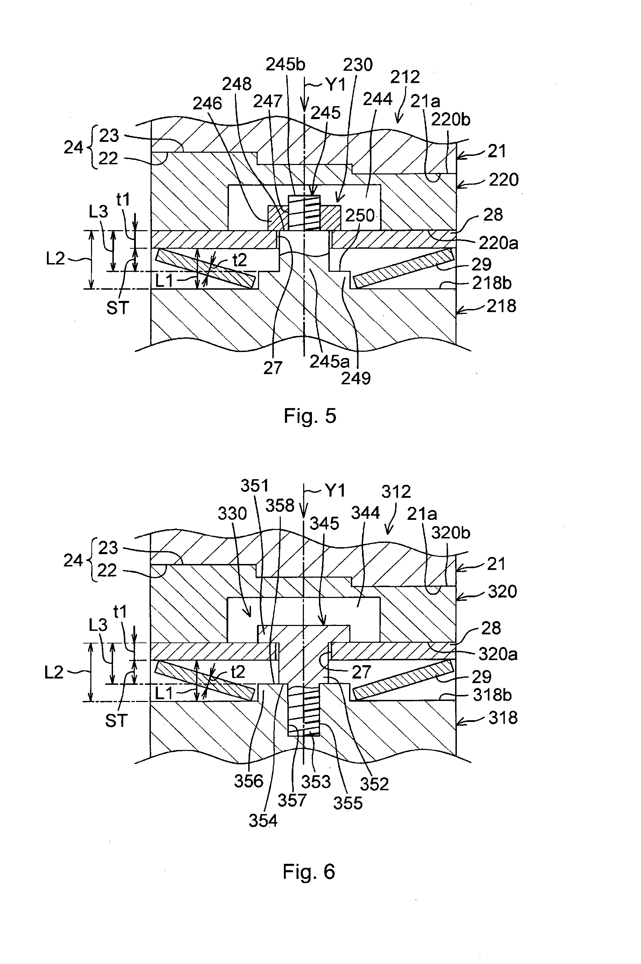

FIG. 5 illustrates a rack shaft supporting device 212 according to further another embodiment of the invention. The present embodiment is different from the embodiment in FIG. 3 mainly in the following point. That is, in the embodiment in FIG. 3, the first surface in which the recessed portion 44 is provided is the rear face 18b of the support yoke 18, and the second surface on which the projection shaft 45 is provided is the front face 20a of the support member 20. In contrast, in a set length regulation mechanism 230 of the present embodiment, a first surface in which a recessed portion 244 is provided is a front face 220a of a support member 220, and a second surface on which a projection shaft 245 is provided is a rear face 218b of a support yoke 218. A cam surface 23 is provided in a rear face 220b (a facing surface) of the support member 220.

The projection shaft 245 is formed integrally with the support yoke 218 from the same material. More specifically, the projection shaft 245 includes a proximal end portion 245a fixed to the rear face 218b (the second surface) of the support yoke 218, and a distal end portion 245b. On an outer periphery of the distal end portion 245b, an external thread portion 247 to which a nut 246 as a receiving member that receives the washer 28 is screwed, and a positioning stepped portion 248 provided adjacently to the external thread portion 247 and abutting on an end face of the nut 246 to position the nut 246 in an axial direction of the projection shaft 245 are provided.

A large-diameter portion 249 is provided on an outer periphery of the proximal end portion 245a of the projection shaft 245, and an end face of the large-diameter portion 249 constitutes a stepped portion 250. When the coned disc spring 29 (the compression spring) is compressed, the stepped portion 250 abuts on the washer 28 so as to regulate the maximum compression amount of the coned disc spring 29. The constituents in the embodiment in FIG. 5 which are the same as the constituents in the embodiment in FIG. 3 have the same reference signs as those of the constituents in the embodiment in FIG. 3. In the present embodiment as well, it is possible to absorb a variation in engagement and to reliably restrain occurrence of noise for a long period, similarly to the embodiment in FIG. 3.

FIG. 6 illustrates a rack shaft supporting device 312 according to further another embodiment of the invention. The present embodiment is different from the embodiment in FIG. 4 in the following point. That is, in the set length regulation mechanism 130 according to the embodiment in FIG. 4, the first surface in which the recessed portion 44 is provided is the rear face 18b of the support yoke 18, and the second surface to which the shoulder bolt 145 as the projection shaft is fixed is the front face 120a of the support member 120.

In contrast, in a set length regulation mechanism 330 according to the present embodiment, a first surface in which a recessed portion 344 is provided is a front face 320a of a support member 320, and a second surface to which a shoulder bolt 345 as a projection shaft is fixed is a rear face 318b of a support yoke 318. The shoulder bolt 345 as the projection shaft includes a head 351 having, for example, a hexagon shape and constituting a receiving portion, a large-diameter shank portion 352 adjacent to the head 351 and inserted through the insertion hole 27 of the washer 28, a small-diameter shank portion 353 disposed closer to a leading end of the shoulder bolt 345 (corresponding to a proximal end portion of the projection shaft) than the large-diameter shank portion 352 and having a diameter smaller than that of the large-diameter shank portion 352, a positioning stepped portion 354 formed between the large-diameter shank portion 352 and the small-diameter shank portion 353, and an external thread portion 355 provided on an outer periphery of the small-diameter shank portion 353 so as to be adjacent to the positioning stepped portion 354. The positioning stepped portion 354 is disposed in the proximal end portion of the projection shaft (corresponding to the leading end portion of the shoulder bolt 345).

A boss 356 projecting from the rear face 318b of the support yoke 318 is formed integrally with the support yoke 318 from the same material. The external thread portion 355 of the shoulder bolt 345 is screwed into a thread hole 357 provided in the boss 356, and the positioning stepped portion 354 abuts on a stepped portion 358 constituted by an end face of the boss 356. A cam surface 23 is provided in a rear face 320b (a facing surface) of the support member 320.

The constituents in the present embodiment which are the same as the constituents in the embodiment in FIG. 4 have the same reference signs as those of the constituents in the embodiment in FIG. 4. In the present embodiment as well, it is possible to absorb a variation in engagement and to reliably restrain occurrence of noise for a long period, similarly to the embodiment in FIG. 4.

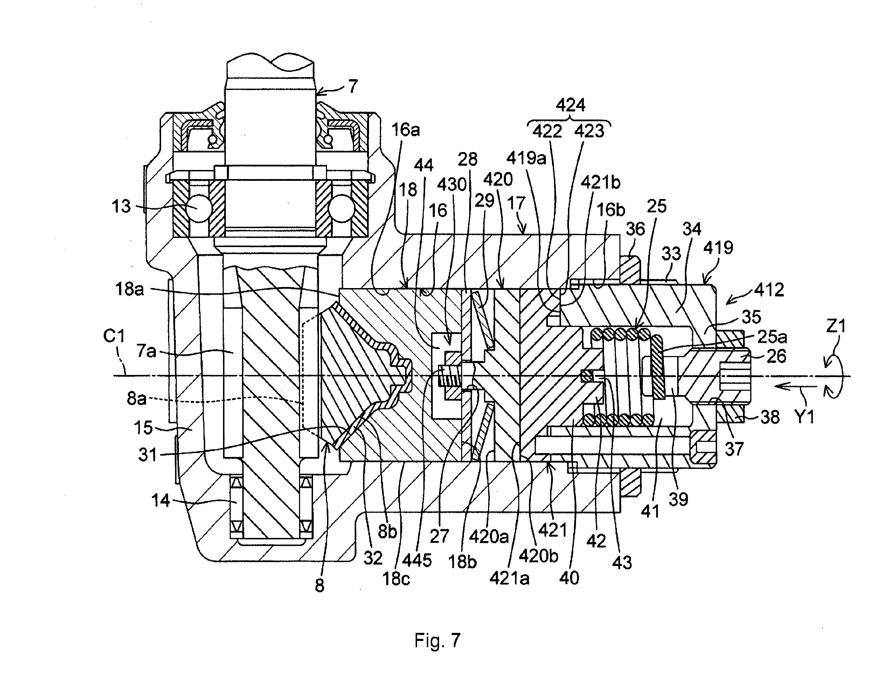

FIG. 7 illustrates a rack shaft supporting device 412 according to further another embodiment of the invention. In the embodiment in FIG. 2, the paired cam surfaces 22 and 23 are provided in the front face 21a (the facing surface) of the intermediate member 21 and in the rear face 20b (the facing surface) of the support member 20 so as to constitute the cam mechanism 24. In contrast, in the present embodiment, as illustrated in FIG. 7, paired cam surfaces 422 and 423 are provided in a front face 419a (a facing surface) of a fixing member 419 and a rear face 421b (a facing surface) of an intermediate member 421 so as to constitute a cam mechanism 424. Further, a front face 421a of the intermediate member 421 and a rear face 420b of the support member 420 are flat surfaces orthogonal to a central axis C1. Furthermore, a set length regulation mechanism 430 includes the recessed portion 44 provided in the rear face 18b (the first surface) of the support yoke 18, and a projection shaft 445 formed integrally with a front face 420a (a second surface) of the support member 420 from the same material.

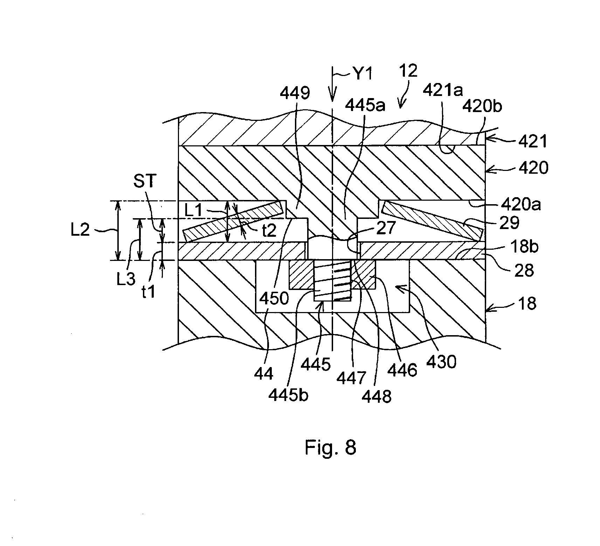

As illustrated in FIG. 8, the projection shaft 445 is formed integrally with the support member 420 from the same material. More specifically, the projection shaft 445 includes a proximal end portion 445a fixed to the front face 420a (the second surface) of the support member 420, and a distal end portion 445b. On an outer periphery of the distal end portion 445b, an external thread portion 447 to which a nut 446 as a receiving member that receives the washer 28 is screwed, and a positioning stepped portion 448 provided adjacently to the external thread portion 447 and abutting on an end face of the nut 446 to position the nut 446 in an axial direction of the projection shaft 445 are provided.

A large-diameter portion 449 is provided on an outer periphery of the proximal end portion 445a of the projection shaft 445, and an end face of the large-diameter portion 449 constitutes a stepped portion 450. When the coned disc spring 29 (the compression spring) is compressed, the stepped portion 450 abuts on the washer 28 so as to regulate the maximum compression amount of the coned disc spring 29 (corresponding to the effective stroke ST). The constituents in the present embodiment which are the same as the constituents in the embodiments of FIGS. 2 and 3 have the same reference signs as those of the constituents in the embodiments of FIGS. 2 and 3. In the present embodiment as well, it is possible to absorb a variation in engagement and to reliably restrain occurrence of noise for a long period, similarly to the embodiment in FIG. 2. In the present embodiment, the shoulder bolt 145 as illustrated in FIG. 4 may be employed as the projection shaft, instead of the projection shaft 445. Further, in the present embodiment, the set length regulation mechanism 230 in FIG. 5 or the set length regulation mechanism 330 in FIG. 6 may be employed, instead of the set length regulation mechanism 430.

Note that the present invention is not limited to the aforementioned embodiments. In the aforementioned embodiments, the torsion coil spring is used as the rotational force applying spring 25. However, instead of the torsion coil spring, a spiral spring may be used. Further, in the respective embodiments in FIGS. 3, 4, 5, 6, and 8, the stepped portions 50, 250, 450, 158, and 358 may not be provided. Further, in the aforementioned embodiments, the adjustment thread 26 for adjusting the torsion amount of the rotational force applying spring 25 is used. However, the adjustment thread may not be provided and one end of the rotational force applying spring may be fixed to the fixing member.

Further, the aforementioned embodiments have been described based on examples in which the invention is applied to, what is called, a manual-type vehicle steering system. Alternatively, the invention may be applied to various types (what is called, a column assist type, a pinion assist type, a rack assist type, and the like) of electric power steering systems.

Further, the invention may be applied, for example, to a variable transfer ratio vehicle steering system including a variable transfer ratio mechanism capable of changing a ratio of a steered angle of a steered wheel with respect to a steering angle of a steering member and configured to use an output of an electric motor to drive the variable transfer ratio mechanism, and a steer-by-wire vehicle steering system in which a steering member is mechanically unconnected with a steered wheel and steering of the steered wheel is performed using an output of an electric motor.

## Claims

1. A rack shaft supporting device (12) comprising:
a fixing member (19) fixed to a housing (17);
a support yoke (18) that supports a rack shaft (8) so that the rack shaft is slidable;
a support member (20) that is provided between the fixing member (19) and the support yoke (18), and that supports the support yoke;
an intermediate member (21) provided between the fixing member and the support
member;
a cam mechanism (24) including paired cam surfaces (22, 23) provided either in paired facing surfaces of the fixing member and the intermediate member or in paired facing surfaces of the intermediate member and the support member, the paired cam surfaces being engaging with each other;
a rotational force applying spring (25) that rotates members in which the paired cam surfaces are formed, relative to each other;
a washer (28) provided between a first surface constituted by either one of paired facing surfaces of the support member and the support yoke, and a second surface (20a) constituted by the other of the paired facing surfaces, the washer having an insertion hole formed therein; **characterized by**
a compression spring (29) provided between the second surface and the washer and pressing the support yoke toward the rack shaft; and
a set length regulation mechanism (30) that regulates a set length (L1) of the compression spring,
wherein the set length regulation mechanism includes:
a recessed portion (44) provided in the first surface (18b);
a projection shaft (45) including a proximal end portion fixed to the second surface (20a) and a distal end portion (45b) provided with a receiving portion that receives the washer, the projection shaft being inserted through the insertion hole of the washer so as to project into the recessed portion; and
a positioning stepped portion (48) provided in either one of the proximal end portion and the distal end portion of the projection shaft, the positioning stepped portion abutting on a corresponding one of the second surface and the receiving portion.

2. The rack shaft supporting device according to claim 1, wherein:
the positioning stepped portion is provided in the distal end portion of the projection shaft; and
the receiving portion is constituted by a nut fitted to an external thread portion on an outer periphery of the distal end portion of the projection shaft.

3. The rack shaft supporting device according to claim 2, wherein
the proximal end portion of the projection shaft is formed integrally with the second surface from a same material.

4. The rack shaft supporting device according to claim 1, wherein
the projection shaft is constituted by a shoulder bolt including an external thread portion and a head constituting the receiving portion, the external thread portion being screwed into a thread hole provided in the second surface and being adjacent to the positioning stepped portion.

5. The rack shaft supporting device according to any one of claims 1 to 4, wherein:
the spring member includes a coned disc spring; and
the projection shaft includes a stepped portion that regulates a compression amount of the coned disc spring by abutting on the washer when the coned disc spring is compressed.

6. A vehicle steering system in which a rack shaft is supported so as to be slidable in an axial direction by use of the rack shaft supporting device according to any one of claims 1 to 5.

## Patentansprüche

1. Zahnstangenlagervorrichtung (12), mit:
einem Fixierbauteil (19), das am Gehäuse (17) fixiert ist;
einem Lagerjoch bzw. einer Lagergabel (18), die eine Zahnstange (8) so lagert, dass die Zahnstange (8) verschiebbar ist;
einem Lagerbauteil (20), das zwischen dem Fixierbauteil (19) und der Lagergabel (18) angeordnet ist und die Lagergabel (18) lagert;
einem Zwischenbauteil (21), das zwischen dem Fixierbauteil (19) und dem Lagerbauteil (20) angeordnet ist;
einem Nockenmechanismus, der eine Nockenflächenpaarung (22, 23) umfasst, die entweder von gepaarten Stirnflächen des Fixierbauteils (19) und des Zwischenbauteils (21) oder von gepaarten Stirnflächen des Zwischenbauteils (21) und des Lagerbauteils (20) gebildet wird, wobei die gepaarten Nockenflächen (22, 23) miteinander in Eingriff stehen;
einer eine Rotationskraft aufbringenden Feder (25), welche die Bauteile, in denen die gepaarten Nockenflächen (22, 23) ausgebildet sind, relativ zueinander verdreht; und
einer Druck- bzw. Unterlegscheibe (28), die zwischen einer ersten Oberfläche (18b), die durch eine der beiden gepaarten Stirnflächen des Lagerbauteils (20) und der Lagergabel (18) gebildet wird, und einer zweiten Oberfläche (20a), die durch die andere der beiden gepaarten Stirnflächen gebildet wird, angeordnet ist, wobei in der Unterlegscheibe (28) ein Einsteckloch ausgebildet ist; **gekennzeichnet durch**
eine Druckfeder (29), die zwischen der zweiten Oberfläche (20a) und der Unterlegscheibe (28) angeordnet ist und die Lagergabel (18) gegen die Zahnstange (8) drückt; und
einen Einstelllängenregulierungsmechanismus (30), der die Einstelllänge (L1) der Druckfeder (29) reguliert, wobei
der Einstelllängenmechanismus (30) folgendes aufweist:
eine Aussparung (44), die in der ersten Oberfläche (18b) vorgesehen ist;
einen hervorstehenden Wellenabschnitt (45), mit einem proximalen Endabschnitt (45a), der an der zweiten Oberfläche (20a) fixiert ist und einem distalen Endabschnitt (45b), der über einen Aufnahmeabschnitt für die Unterlegscheibe (28) verfügt, wobei der hervorstehende Wellenabschnitt (45) **durch** das Einsteckloch der Unterlegscheibe (28) gesteckt ist und **dadurch** in die Aussparung (44) hinein vorsteht; und
einen Positionierungs-Stufenabschnitt (48), der entweder im proximalen Endabschnitt (45a) oder im distalen Endabschnitt (45b) des hervorstehenden Wellenabschnitts (45) vorgesehen ist und an ein korrespondierendes Bauteil, entweder die zweite Oberfläche (20a) oder den Aufnahmeabschnitt anschlägt.

2. Zahnstangenlagervorrichtung gemäß Anspruch 1, bei der
der Positionierungs-Stufenabschnitt am distalen Endabschnitt des vorstehenden Wellenabschnitts vorgesehen ist; und
der Aufnahmeabschnitt von einer Mutter ausgebildet ist, welche auf einem Außengewindeabschnitt auf einer äußeren Peripherie des distalen Endabschnitts des hervorstehenden Wellenabschnitts montiert ist.

3. Zahnstangenlagervorrichtung gemäß Anspruch 2, bei der
der proximale Endabschnitt des hervorstehenden Wellenabschnitts mit der zweiten Oberfläche einstückig aus demselben Material ausgebildet ist.

4. Zahnstangenlagervorrichtung gemäß Anspruch 1, bei der
der hervorstehende Wellenabschnitt von einer Schulterschraube mit einem Außengewindeabschnitt und einem Kopf gebildet ist, welcher den Aufnahmeabschnitt bildet, wobei der Außengewindeabschnitt in ein Gewindeloch in der zweiten Oberfläche geschraubt ist, welches an den Positionierungs-Stufenabschnitt angrenzt.

5. Zahnstangenlagervorrichtung gemäß einem der Ansprüche 1 bis 4, bei der die Druckfeder als konische Tellerfeder ausgebildet ist, und
der hervorstehende Wellenabschnitt einen abgestuften Abschnitt enthält, welcher die Druckstärke auf die konische Tellerfeder reguliert, indem er an die Unterlegscheibe anschlägt, wenn die konische Tellerfeder komprimiert ist.

6. Lenksystem für Fahrzeuge in dem eine Zahnstange durch die Verwendung der Zahnstangenlagervorrichtung gemäß einem der Ansprüche 1 bis 5 so gelagert ist, dass sie in axialer Richtung gleiten kann.

## Revendications

1. Dispositif de support d'arbre de crémaillère (12) comprenant :
un élément de fixation (19) fixé à un carter (17) ;
une chape de support (18) qui supporte un arbre de crémaillère (8) de telle manière que l'arbre de crémaillère peut coulisser ;
un élément de support (20) qui est placé entre l'élément de fixation (19) et la chape de support (18), et qui supporte la chape de support ;
un élément intermédiaire (21) placé entre l'élément de fixation et l'élément de support ;
un mécanisme de came (24) incluant des surfaces de came (22, 23) appariées placées soit dans des surfaces se faisant face appariées de l'élément de fixation et de l'élément intermédiaire soit dans des surfaces se faisant face appariées de l'élément intermédiaire et de l'élément de support, les surfaces de came appariées venant en prise l'une avec l'autre ;
un ressort d'application dé force de rotation (25) qui fait tourner les éléments dans lesquels les surfaces de came appariées sont formées relativement l'un à l'autre ;
une rondelle (28) placée entre une première surface constituée par l'une des surfaces se faisant face appariées de l'élément de support et de la chape de support, et une seconde surface (20a) constituée par l'autre des surfaces se faisant face appariées, la rondelle comportant un trou d'insertion formé à l'intérieur ; **caractérisé par**
un ressort de compression (29) placé entre la seconde surface et la rondelle et pressant la chape de support vers l'arbre de crémaillère ; et
un mécanisme de régulation de longueur établie (30) qui régule une longueur établie (L1) du ressort de compression,
dans lequel le mécanisme de régulation de longueur établie inclut :
une partie d'évidement (44) pratiquée dans la première surface (18b) ;
un arbre saillant (45) incluant une partie d'extrémité proximale fixée sur la seconde surface (20a) et une partie d'extrémité distale (45b) pourvue d'une partie de réception qui reçoit la rondelle, l'arbre saillant étant inséré à travers le trou d'insertion de la rondelle de façon à faire saillie dans la partie d'évidement ; et
une partie étagée de positionnement (48) placée dans l'une de la partie d'extrémité proximale et de la partie d'extrémité distale de l'arbre saillant, la partie étagée de positionnement venant en butée sur l'une correspondante de la seconde surface et de la partie de réception.

2. Dispositif de support d'arbre de crémaillère selon la revendication 1, dans lequel :
la partie étagée de positionnement est placée dans la partie d'extrémité distale de l'arbre saillant ; et
la partie de réception est constituée par un écrou ajusté sur une partie de filetage extérieure sur une périphérie extérieure de la partie d'extrémité distale de l'arbre saillant.

3. Dispositif de support d'arbre de crémaillère selon la revendication 2, dans lequel
la partie d'extrémité proximale de l'arbre saillant est formée d'un seul bloc avec la seconde surface à partir d'un même matériau.

4. Dispositif de support d'arbre de crémaillère selon la revendication 1, dans lequel
l'arbre saillant est constitué par un boulon à épaulement incluant une partie de filetage extérieure et une tête constituant la partie de réception, la partie de filetage extérieur étant vissée dans un trou fileté pratiqué dans la seconde surface et étant adjacente à la partie étagée de positionnement.

5. Dispositif de support d'arbre de crémaillère selon l'une quelconque des revendications 1 à 4, dans lequel :
l'élément de ressort inclut une rondelle ressort conique ; et
l'arbre saillant inclut une partie étagée qui régule une quantité de compression de la rondelle ressort conique en venant en butée sur la rondelle quand la rondelle ressort conique est comprimée.

6. Système de direction de véhicule dans lequel un arbre de crémaillère est supporté de façon à pouvoir coulisser dans une direction axiale en utilisant le dispositif de support d'arbre de crémaillère selon l'une quelconque des revendications 1 à 5.
